# EUROPEAN PATENT SPECIFICATION

(11) **EP 4 068 017 B1**
(45) Date of publication and mention of the grant of the patent: **28.08.2024**
(21) Application number: 21020176.0
(22) Date of filing: 31.03.2021
(51) Int. Cl.: G05B 19/404

(54) **DYNAMIC DISPLACEMENT INACCURACY COMPENSATION SYSTEM**
SYSTEM ZUR KOMPENSATION VON DYNAMISCHER VERSCHIEBUNGSUNGENAUIGKEIT
SYSTÈME DE COMPENSATION D'INEXACTITUDE DE DÉPLACEMENT DYNAMIQUE

(43) Date of publication of application: 05.10.2022
(73) Proprietor: Hiwin Mikrosystem Corp., Taichung City 40852 (TW)
(72) Inventor: KAI-TI, Chen, 40852 Taichung City (TW); CHUN-YI, Yi, 40852 Taichung City (TW); WEI-TE, Chuang, 40852 Taichung City (TW); YEN-YU, Chen, 40852 Taichung City (TW)
(74) Representative: Lang, Christian

(56) References cited:
- CN-A- 109 709 892
- US-A1- 2008 265 824
- US-A1- 2016 062 325

## Description

### BACKGROUND OF THE INVENTION

### Field of Invention

The invention is related to positioning calibration technology of motors, and more particularly to a dynamic displacement error compensation system.

### Related Art

In the technical field where motors are used as displacement driving components, limited machining precision affects the accuracy of displacement positions. In modern industries where precision is becoming more and more important, a slight position error may lead to major product defects. In order to ensure the accuracy of displacement position, a number of prior technologies have been disclosed in the prior art. For example, in the Chinese Patent Publication No. 104076739A, it is disclosed that a laser interferometer is used to measure the displacement stroke of a linear motor in order to know the deviation degree at each specific position of the linear motor in its displacement stroke, and based thereon to establish an error compensation table of the linear motor, and then use the error compensation table as the basis of position calibration for the linear motor in use, thereby improving the accuracy of displacement position.

However, the technology disclosed in the above-mentioned Chinese Patent Publication No. 104076739A can only compensate and calibrate the position of a single-axis movement, and cannot compensate and calibrate the position coupling error of a dual-axes motion on a plane, and thus its application is still limited. Therefore, there is another Chinese Patent Publication No. 109709892A that provides a spatial position compensation technology for multi-axes linkage. After collecting the positional information of each axis movement, calculations are further performed through the spatial position compensation program in a computer to correct the feedback position signal of a position sensing element, and the corrected feedback position signal is fed back to a drive system to compensate based on the corrected feedback positional information. Although the above-mentioned Chinese Patent Publication No. 109709892A can be used for dynamic compensation, it requires an additional external computer device with high computing power to be able to perform calculations and correction compensation, and the cost is expensive.

Document CN 109 709 892 A provides a method for online compensation of spatial error of a multi-axis linkage numerical control machine tool. Document US 2008 / 265 824 A1 relates to a method and a system for compensating for a position error of a step motor. Document US 2016 / 062 325 A1 describes a motor control system which uses position command values output from control parts for motors and feedback information from axes which are driven by the command values.

### SUMMARY OF THE INVENTION

Therefore, a main object of the invention is to provide a dynamic displacement error compensation system capable of achieving error compensation for two-dimensional motion or motion of more than two dimensions without being required to set up additional devices in a drive framework, which is economical and accurate.

In order to achieve the above-mentioned object, a dynamic displacement error compensation system having the features of claim 1 is provided for. Advantageous embodiments are subject matter of the dependent claims.

A main technical feature of a dynamic displacement error compensation system provided by the invention is that detection error information obtained based on calibration detection of a first axis and a second axis, is respectively made into a first compensation table for compensating displacement on the first axis and a second compensation table for compensating displacement on the second axis by using positional information of the first axis and the second axis as variables, and the first compensation table is stored in a first driver of a first motor device for driving a first moving element to move linearly on the first axis, and the second compensation table is stored in a second driver of a second motor device for driving a second moving element to move linearly on the second axis, and the first driver and the second driver simultaneously or successively obtain a first dynamic positional information of the first moving element on the first axis and a second dynamic positional information of the second moving element on the second axis, and then the first moving element and the second moving element are respectively displaceably compensated according to the first compensation table and the second compensation table.

Thereby, the dynamic displacement error compensation system is capable of performing dynamic displacement error compensation by using the first driver and the second driver without being required to set up additional computing devices for computing compensation. In addition to being able to reduce costs, compensation of displacement error is also achieved for two different axial directions or more than two different axial directions.

Further, in order to enable the dynamic displacement error compensation system to be applied to the existing technology without hindrance, the dynamic displacement error compensation system further comprises a communication unit. The communication unit is electrically connected to the first driver and the second driver, so that the first dynamic positional information obtained by the first driver is transmitted to the second driver via the communication unit, similarly, the second dynamic positional information obtained by the second driver is also transmitted to the first driver via the communication unit, thereby the first dynamic positional information and the second dynamic positional information obtained by the first driver and the second driver are used to compensate motional displacement on the first axis and the second axis according to the first compensation table and the second compensation table respectively.

### BRIEF DESCRIPTION OF THE DRAWINGS

The objects, features, and achieved efficacies of the invention can be understood from the description and drawings of the following preferred embodiments, in which:
FIG. 1 is a schematic diagram of a preferred embodiment of the invention;
FIG. 2 is a flow chart of establishing a detection error compensation table in a preferred embodiment of the invention;
FIG. 3 is a flowchart of performing dynamic error compensation in a preferred embodiment of the invention;
FIG. 4 is circularity test results after performing dynamic error compensation in a preferred embodiment of the invention; and
FIG. 5 is circularity test results of a control group of the invention without performing dynamic error compensation.

### DETAILED DESCRIPTION OF THE INVENTION

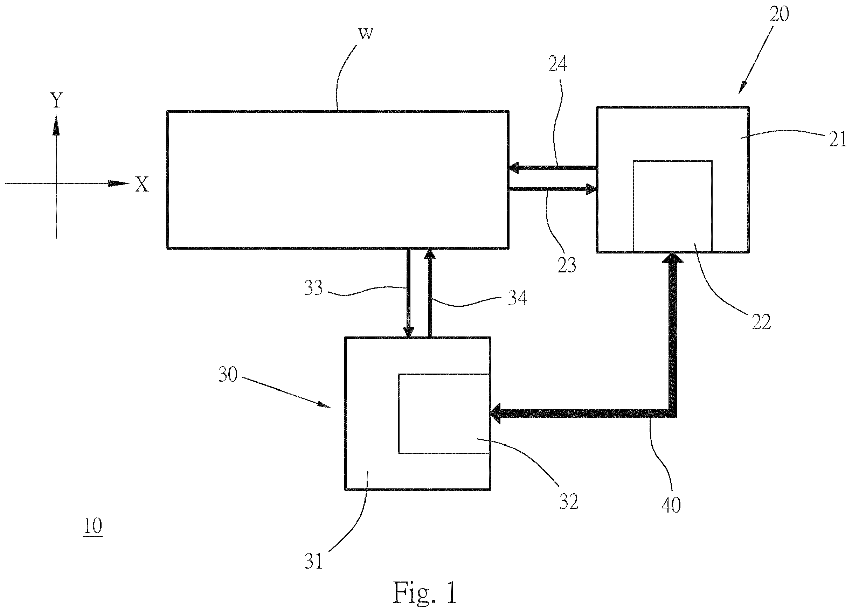

First of all, please refer to FIG. 1 for a dynamic displacement error compensation system 10 provided in a preferred embodiment of the invention mainly comprising a first motor device 20 and a second motor device 30, a first moving element driven by the first motor device 20 to displace linearly reciprocatively along a first axis X direction, and a second moving element driven by the second motor device 30 to displace linearly reciprocatively along a second axis Y direction. As shown in FIG. 1, the directions of the first axis X and the second axis Y are perpendicular to each other, and working strokes of the first moving element and the second moving element define a working plane W. However, the above-disclosed technique is not a technical subject matter intended to be improved through the invention, and it is a known prior art for those having ordinary skill in the art in the technical field to which the invention pertains, so the present invention will only explain the parts related to the technical features of the invention based on the parts essentially required to understand the technical features of the invention.

Wherein the first motor device 20 is a linear motor, and is provided with a stator extending along the first axis X direction, and a rotor as the first moving element that moves in the first axis X direction. Similarly, the second motor device 30 is also a linear motor, and is provided with a stator extending along the second axis Y direction, and a rotor as the second moving element that moves in the second axis Y direction. In addition, position sensing technique such as optical ruler, magnetic ruler or other position sensing techniques used to obtain dynamic positional information of the first moving element and the second moving element, are also well-known technical contents, and are known to those having ordinary skill in the art in the technical field to which the invention pertains.

The features of the dynamic displacement error compensation system 10 which are different from the above-mentioned prior art lie in the ware and the method. Among them, as for the ware, a first driver 21 of the first motor device 20 is provided with a first dynamic error processing unit 22, and a second driver 31 of the second motor device 30 is provided with a second dynamic error processing unit 32. And a communication unit 40 is electrically connected to the first driver 21 and the second driver 31, so that the first driver 21 and the second driver 31 are capable of communicating with each other via the communication unit 40.

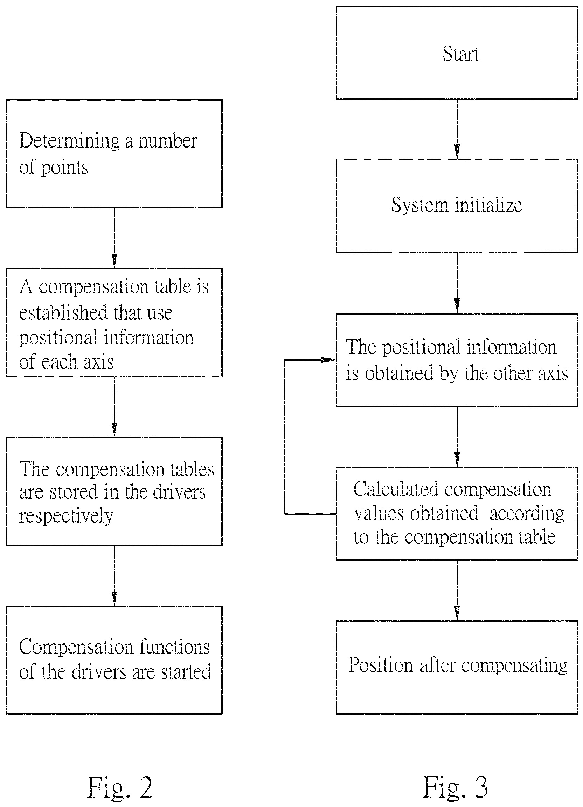

As for the method, as shown in FIG. 2, displacements of the first moving element and the second moving element on the first axis X and the second axis Y respectively are detected to obtain error values, and after determining a number of points compensated on a plane based on the error values, a first compensation table and a second compensation table are established that use positional information of the first axis X and positional information of the second axis Y as variables which are applicable for compensating the first axis X as shown in Table 1, and applicable for compensating the second axis Y as shown in Table 2 respectively, and then the first compensation table is stored in the first driver 21, the second compensation table is stored in the second driver 31, and compensation functions of the first driver 21 and the second driver 31 are started.

Please continue to refer to FIGS. 1 and 3, after the dynamic displacement error compensation system 10 is initialized, by using conventional position sensing technique, a first dynamic positional information 23 of the first moving element moving on the first axis X is fed back to the first driver 21, and a second dynamic positional information 33 of the second moving element moving on the second axis Y is fed back to the second driver 31, and at the same time, the second dynamic positional information 33 is obtained by the first driver 21 from the second driver 31 via the communication unit 40, and the first dynamic positional information 23 is obtained by the second driver 31 from the first driver 21 via the communication unit 40. Thereby, based on the obtained first dynamic positional information 23 and second dynamic positional information 33, and calculated compensation values obtained corresponding to and according to the first compensation table and the second compensation table respectively, the first dynamic error processing unit 22 and the second dynamic error processing unit 32 are capable of dynamically compensating displacements for the first moving element and the second moving element through control signals 24, 34. For example: when the first dynamic positional information 23 corresponds to a position at 120 mm of the first axis X, and the second dynamic positional information corresponds to a position at 90 mm of the second axis Y; according to the first compensation table as Table 1 , a compensation value should be given to dynamic displacement of the first moving element by the first driver 21 is -0.85 mm;

**Table 1 : the first compensation table**

| | | **Position on the first axis (unit mm)** | | | | | | | | | | |
|---|---|---|---|---|---|---|---|---|---|---|---|---|
| | | **0** | **30** | **60** | **90** | **120** | **150** | **180** | **210** | **240** | **270** | **300** |
| **Position on the second axis (unit mm)** | 0 | 3.38 | -3.75 | -4.80 | -3.17 | -1.84 | 2.50 | -3.57 | 4.65 | -0.47 | 3.37 | -3.17 |
| | 30 | 1.26 | 4.24 | 1.14 | 4.06 | 1.36 | 3.72 | -3.07 | -4.35 | 1.79 | 3.84 | -2.49 |
| | 60 | 2.32 | 0.59 | 3.69 | -2.31 | -4.46 | 0.43 | 3.70 | -3.79 | -1.18 | -2.57 | -3.67 |
| | 90 | 1.86 | 0.41 | 3.89 | 2.35 | -0.85 | -0.74 | -2.63 | -3.93 | -2.33 | -4.64 | 3.94 |
| | 120 | -1.95 | -0.09 | 3.97 | 0.34 | 4.33 | 2.14 | -1.59 | 1.54 | 2.43 | -2.61 | 4.42 |
| | 150 | -4.06 | -0.10 | -4.45 | 3.32 | -3.79 | -1.73 | 2.44 | -0.82 | 1.90 | 2.16 | -0.60 |
| | 180 | 1.61 | -1.95 | -2.48 | -4.60 | -3.93 | 2.94 | 1.52 | -3.30 | -2.90 | -2.03 | 3.96 |
| | 210 | 0.73 | 2.37 | 3.13 | 0.76 | 3.03 | 1.94 | 3.25 | -0.73 | -1.91 | -2.09 | 0.24 |
| | 240 | 1.37 | 2.92 | 2.73 | -0.20 | -3.53 | 3.46 | 4.00 | -2.06 | -0.04 | 2.69 | -3.73 |
| | 270 | -1.51 | 4.75 | 0.32 | -2.55 | 4.60 | 0.73 | -3.03 | 3.53 | -1.79 | 4.15 | 1.70 |
| | 300 | 0.49 | -1.39 | 2.98 | 0.91 | 3.09 | -0.86 | 4.91 | 3.19 | 0.98 | -2.48 | -2.30 |
| | | **Compensation value (unit um)** | | | | | | | | | | |

and according to the second compensation table as Table 2, a compensation value should be given to dynamic displacement of the second moving element by the second driver 31 is -0.82 mm.

**Table 2 : the second compensation table**

| | | **Position on the first axis (unit mm)** | | | | | | | | | | |
|---|---|---|---|---|---|---|---|---|---|---|---|---|
| | | **0** | **30** | **60** | **90** | **120** | **150** | **180** | **210** | **240** | **270** | **300** |
| **Position on the second axis (unit mm)** | 0 | -4.87 | -0.53 | -2.17 | -0.01 | -0.78 | -3.79 | 2.42 | -3.43 | -0.23 | 1.57 | -2.26 |
| | 30 | -3.85 | 3.17 | -1.54 | -1.08 | -4.47 | 3.97 | -1.76 | 0.67 | -0.90 | 1.69 | 4.14 |
| | 60 | -0.27 | -4.24 | 3.94 | 2.67 | -4.52 | -1.01 | -4.77 | 3.93 | -4.66 | 4.19 | -1.29 |
| | 90 | -2.93 | -2.92 | -3.04 | 0.98 | -0.82 | -0.69 | 2.44 | 2.85 | -4.80 | 1.61 | 1.89 |
| | 120 | -4.65 | 0.93 | -4.55 | -3.88 | -2.39 | -4.09 | 1.69 | 2.18 | 4.00 | -1.73 | 4.32 |
| | 150 | 1.50 | 0.75 | 0.43 | -1.82 | 2.08 | 3.53 | 0.14 | -4.33 | -0.13 | -4.81 | 2.78 |
| | 180 | 4.77 | -1.20 | 1.96 | 2.71 | -1.66 | -3.19 | 3.64 | 2.81 | -4.58 | 4.78 | 1.90 |
| | 210 | 4.79 | 2.65 | -0.05 | 2.57 | 3.98 | 2.81 | -4.40 | 2.04 | -2.61 | 2.65 | -4.63 |
| | 240 | 4.24 | -0.27 | -1.56 | -2.97 | -2.19 | -4.10 | 2.16 | -4.93 | 3.56 | 1.80 | -1.68 |
| | 270 | 4.77 | -1.09 | 0.71 | -1.11 | 4.08 | -1.58 | 1.21 | 2.44 | -2.22 | 1.75 | 2.43 |
| | 300 | 4.81 | -2.88 | 3.73 | -0.99 | -0.81 | 4.12 | 4.31 | 0.96 | -2.00 | -2.30 | 1.63 |
| | | **Compensation value (unit um)** | | | | | | | | | | |

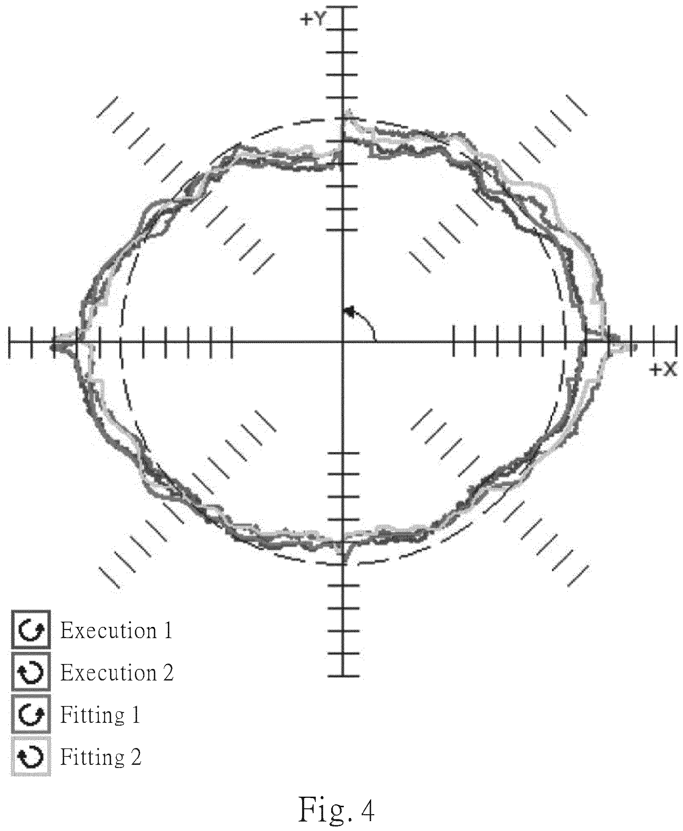

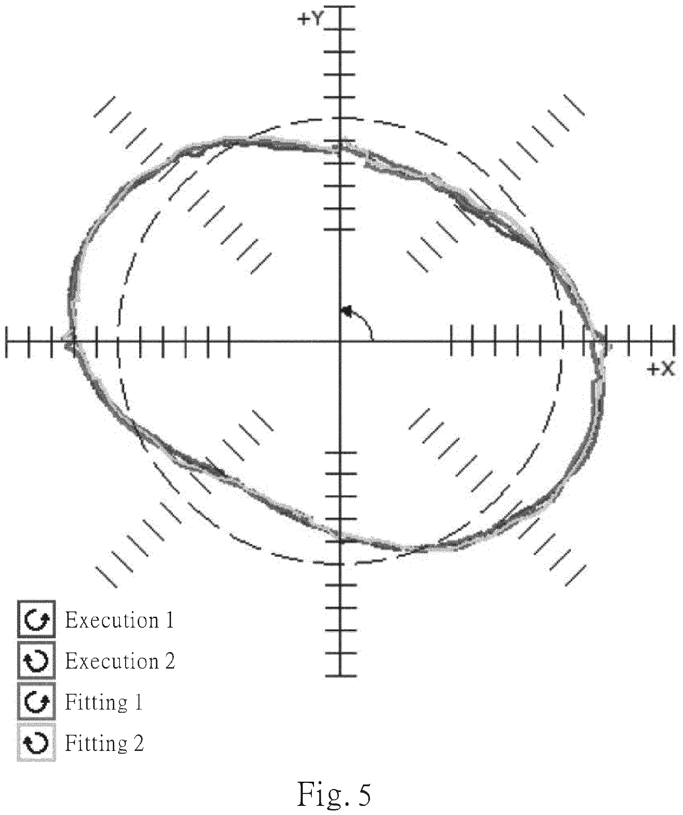

After performing the above-mentioned dynamic displacement error compensation, a circular degree of 11.0 µm is obtained from circularity test results shown in FIG. 4, compared to a circular degree of 23.5 µm obtained from uncompensated control circularity test results shown in FIG. 5, the invention is capable of achieving dynamic displacement error compensation and improving the precision of processing. In addition, the invention does not require additional compensation devices, dynamic displacement error compensation and precision of processing can still be achieved by only using the motor and the drivers, which has advantages in economic benefits and is applicable to dynamic position compensation of two axes or more than two axes, and compared with conventional single-axis compensation, compensation accuracy of the invention can also be substantially improved.

In addition, the applicant of the invention needs to provide further explanations. Although the first axis and the second axis are in a relative state of being perpendicular to each other in the above-mentioned embodiment, but they are not limited thereto, the first axis and the second axis can also be parallel to each other or in a state of perpendicularly intersecting with each other. Furthermore, the communication unit can be wireless transmission in addition to wired transmission. And, it is important that a source of the second dynamic positional information obtained by the first driver is not limited to the second driver, the position sensing mechanism can also enable both the first dynamic positional information and the second dynamic positional information to be fed back to the first driver and the second driver without being transmitted via the communication unit, which is also capable of achieving the objects and efficacies of the invention.

It is to be understood that the above description is only preferred embodiments of the present invention and is not used to limit the present invention, and changes in accordance with the concepts of the present invention may be made without departing from the scope of the present invention.

## Claims

1. A dynamic displacement error compensation system (10) comprising:
a first moving element configured to move linearly along a first axis and a first motor device (20) configured to drive the first moving element;
a second moving element configured to move linearly along a second axis and a second motor device (30) configured to drive the second moving element; and
a communication unit electrically connected to a first driver (21) of the first motor and a second driver (31) of the second motor,
**characterized in that**
the first driver (21) of the first motor device (20) is configured to store a first compensation table, and the first driver (21) comprises a first dynamic error processing unit (22);
the second driver (31) of the second motor device (30) is configured to store a second compensation table, and the second driver (31) comprises a second dynamic error processing unit (32);
wherein the first compensation table and the second compensation table contain positional information of the first axis and positional information of the second axis as variables to obtain a compensation value on the first axis and a compensation value on the second axis respectively and
wherein the first compensation table and the second compensation table are a detection error compensation table of the first moving element and the second moving element on the first axis and the second axis respectively, and
the first driver (21) is configured to obtain a first dynamic positional information (23) of the first moving element moving on the first axis and a second dynamic positional information (33) of the second moving element moving on the second axis, the first dynamic error processing unit (22) is configured to perform calculations according to the first compensation table to obtain a corresponding compensation value, and then to compensate displacement of the first moving element on the first axis according to the compensation value;
the second driver (31) is configured to obtain the first dynamic positional information (23) and the second dynamic positional information (33), the second dynamic error processing unit (32) is configured to perform calculations according to the second compensation table to obtain a corresponding compensation value, and then to compensate displacement of the second moving element on the second axis according to the compensation value,
the first driver (21) is further configured to first receive the first dynamic positional information (23) and then transmit the first dynamic positional information (23) to the second driver (31) via the communication unit (40) and the second driver (31) is further configured to first receive the second dynamic positional information (33) and then transmit the second dynamic positional information (33) to the first driver (21) via the communication unit (40).

2. The dynamic displacement error compensation system as claimed in claim 1, wherein the first axis and the second axis are non-coaxial with each other.

3. The dynamic displacement error compensation system as claimed in claim 1, wherein the communication unit (40) is configured to transmit signals between the first driver (21) and the second driver (31) through a line.

## Patentansprüche

1. Dynamisches Verschiebungsfehlerkompensationssystem (10), welches umfasst:
ein erstes bewegliches Element, das zur linearen Bewegung entlang einer ersten Achse konfiguriert ist, und eine erste Motorvorrichtung (20), die zum Antreiben des ersten beweglichen Elements konfiguriert ist;
ein zweites bewegliches Element, das zur linearen Bewegung entlang einer zweiten Achse konfiguriert ist, und eine zweite Motorvorrichtung (30), die zum Antreiben des zweiten beweglichen Elements konfiguriert ist; und
eine Kommunikationseinheit, die elektrisch mit einem ersten Treiber (21) des ersten Motors und einem zweiten Treiber (31) des zweiten Motors verbunden ist,
**dadurch gekennzeichnet, dass**
der erste Treiber (21) der ersten Motorvorrichtung (20) zur Speicherung einer ersten Kompensationstabelle konfiguriert ist, und der erste Treiber (21) eine erste dynamische Fehlerverarbeitungseinheit (22) umfasst;
der zweite Treiber (31) der zweiten Motorvorrichtung (30) zur Speicherung einer zweiten Kompensationstabelle konfiguriert ist, und der zweite Treiber (31) eine zweite dynamische Fehlerverarbeitungseinheit (32) umfasst;
wobei die erste Kompensationstabelle und die zweite Kompensationstabelle eine Positionsinformation der ersten Achse und Positionsinformation der zweiten Achse als Variablen enthalten, um jeweils einen Kompensationswert an der ersten Achse und einen Kompensationswert an der zweiten Achse zu erhalten, und
wobei die erste Kompensationstabelle und die zweite Kompensationstabelle jeweils eine Erfassungsfehlerkompensationstabelle des ersten beweglichen Elements und des zweiten beweglichen Elements an der ersten Achse und der zweiten Achse sind, und
der erstes Treiber (21) konfiguriert ist, um eine erste dynamische Positionsinformation (23) des sich an der ersten Achse bewegenden ersten beweglichen Elements und eine zweite dynamische Positionsinformation (33) des sich an der zweiten Achse bewegenden zweiten beweglichen Elements zu erhalten, wobei die erste dynamische Fehlerverarbeitungseinheit (22) zur Durchführung von Berechnungen gemäß der ersten Kompensationstabelle konfiguriert ist, um einen korrespondierenden Kompensationswert zu erhalten, und um dann die Verschiebung des ersten beweglichen Elements an der ersten Achse dem Kompensationswert entsprechend zu kompensieren;
der zweite Treiber (31) konfiguriert ist, um die erste dynamische Positionsinformation (23) und die zweite dynamische Positionsinformation (33) zu erhalten, wobei die zweite dynamische Fehlerverarbeitungseinheit (32) zur Durchführung von Berechnungen gemäß der zweiten Kompensationstabelle konfiguriert ist, um einen korrespondierenden Kompensationswert zu erhalten, und um dann die Verschiebung des zweiten beweglichen Elements and der zweiten Achse dem Kompensationswert entsprechend zu kompensieren,
der erste Treiber (21) ferner konfiguriert ist, um zuerst die erste dynamische Positionsinformation (23) zu empfangen und dann die erste dynamische Positionsinformation (23) über die Kommunikationseinheit (40) an den zweiten Treiber (31) zu übertragen, und
der zweite Treiber (31) ferner konfiguriert ist, um zuerst die zweite dynamische Positionsinformation (33) zu empfangen und dann die zweite dynamische Positionsinformation (33) über die Kommunikationseinheit (40) an den ersten Treiber (21) zu übertragen.

2. Dynamisches Verschiebungsfehlerkompensationssystem nach Anspruch 1, bei welchem die erste Achse und die zweite Achse nicht koaxial zueinander sind.

3. Dynamisches Verschiebungsfehlerkompensationssystem nach Anspruch 1, bei welchem die Kommunikationseinheit (40) zur Übertragung von Signalen zwischen dem ersten Treiber (21) und dem zweiten Treiber (31) über eine Leitung konfiguriert ist.

## Revendications

1. Système de compensation dynamique d'erreur de déplacement (10) comprenant :
un premier élément mobile configuré pour se déplacer linéairement le long d'un premier axe et un premier dispositif moteur (20) configuré pour entraîner le premier élément mobile ;
un second élément mobile configuré pour se déplacer linéairement le long d'un second axe et un second dispositif moteur (30) configuré pour entraîner le second élément mobile ; et une unité de communication connectée électriquement à un premier dispositif de commande (21) du premier moteur et un second dispositif de commande (31) du second moteur,
**caractérisé en ce que**
le premier dispositif de commande (21) du premier dispositif moteur (20) est configuré pour stocker un premier tableau de compensation, et le premier dispositif de commande (21) comprend une première unité dynamique de traitement d'erreur (22) ;
le second dispositif de commande (31) du second dispositif moteur (30) est configuré pour stocker un second tableau de compensation, et le second dispositif de commande (31) comprend une seconde unité dynamique de traitement d'erreur (32) ;
dans lequel le premier tableau de compensation et le second tableau de compensation contiennent des informations de position du premier axe et des informations de position du second axe sous forme de variables pour obtenir une valeur de compensation sur le premier axe et une valeur de compensation sur le second axe, respectivement, et
dans lequel le premier tableau de compensation et le second tableau de compensation sont un tableau de compensation d'erreur de détection du premier élément mobile et du second élément mobile sur le premier axe et le second axe, respectivement, et
le premier dispositif de commande (21) est configuré pour obtenir des premières informations de position dynamique (23) du premier élément mobile se déplaçant sur le premier axe et des secondes informations de position dynamique (33) du second élément mobile se déplaçant sur le second axe, la première unité dynamique de traitement d'erreur (22) est configurée pour effectuer des calculs selon le premier tableau de compensation pour obtenir une valeur de compensation correspondante, puis pour compenser le déplacement du premier élément mobile sur le premier axe en fonction de la valeur de compensation ;
le second dispositif de commande (31) est configuré pour obtenir les premières informations de position dynamique (23) et les secondes informations de position dynamique (33), la seconde unité dynamique de traitement d'erreur (32) est configurée pour effectuer des calculs selon le second tableau de compensation pour obtenir une valeur de compensation correspondante, puis pour compenser le déplacement du second élément mobile sur le second axe en fonction de la valeur de compensation, le premier dispositif de commande (21) est en outre configuré pour recevoir d'abord les premières informations de position dynamique (23) puis transmettre les premières informations de position dynamique (23) au second dispositif de commande (31) par l'intermédiaire de l'unité de communication (40) et le second dispositif de commande (31) est en outre configuré pour recevoir les secondes informations de position dynamique (33) puis transmettre les secondes informations de position dynamique (33) au premier dispositif de commande (21) par l'intermédiaire de l'unité de communication (40).

2. Système de compensation dynamique d'erreur de déplacement selon la revendication 1, dans lequel le premier axe et le second axe sont non coaxiaux l'un par rapport à l'autre.

3. Système de compensation dynamique d'erreur de déplacement selon la revendication 1, dans lequel l'unité de communication (40) est configurée pour émettre des signaux entre le premier dispositif de commande (21) et le second dispositif de commande (31) par l'intermédiaire d'une ligne.
